# EUROPEAN PATENT APPLICATION

(11) **EP 4 266 453 A1**
(43) Date of publication of application: **25.10.2023**
(21) Application number: 22885431.1
(22) Date of filing: 07.09.2022
(51) Int. Cl.: H01M 10/48, H01M 50/449, H01M 50/457, H01M 4/00, H01M 10/058

(54) **ISOLATION FILM, SECONDARY BATTERY, BATTERY MODULE, BATTERY PACK AND ELECTRICAL APPARATUS**

(30) Priority: 29.10.2021 CN 202111269648
(71) Applicant: Contemporary Amperex Technology Co., Limited, Ningde, Fujian 352100 (CN)
(72) Inventor: HU, Yong, Ningde, Fujian 352100 (CN); SHI, Chunmei, Ningde, Fujian 352100 (CN); ZHANG, Haiming, Ningde, Fujian 352100 (CN); YANG, Chenglong, Ningde, Fujian 352100 (CN); DING, Linting, Ningde, Fujian 352100 (CN); TANG, Daichun, Ningde, Fujian 352100 (CN)
(74) Representative: Gong, Jinping
(86) International application number: PCT/CN2022/117414
(87) International publication number: WO 2023/071541

(57) **Abstract**

The present application provides a separator, a secondary battery, a battery module, a battery pack and an electrical apparatus. The separator sequentially includes a first region, a main region and a second region in a first direction. At least one surface of the first region and/or at least one surface of the second region is provided with a fluorescent coating. The fluorescent coating is used to identify whether the separator is folded or not. The separator of the present application is allowed to be identified in time after being folded, and the folded separator is prevented from being made into a lithium-ion battery, which is conductive to increasing yield of the lithium-ion battery.

## Description

The present application claims priority to 202111269648.5, filed on October 29, 2021.

### Technical Field

The present application relates to the technical field of lithium batteries, and in particular to a separator, a secondary battery, a battery module, a battery pack and an electrical apparatus.

### Background

Lithium-ion batteries have been widely used in products such as electric vehicles and electronic devices due to their characteristics such as high specific energy, high working voltage, low self-discharge rate, small size, and light weight.

During preparation of a lithium-ion battery, a separator may be folded by accident. As the separator plays a role in the battery to isolate a positive electrode plate of the battery from a negative electrode plate thereof, when the separator is folded, it may cause the positive electrode plate and the negative electrode plate of the battery to contact each other to result in a short circuit, affecting safety of the battery.

### Summary of the Invention

The present application is made in view of the above subject, and has an objective to identify a folded separator, allowing the folded separator to be identified in time.

In order to achieve the above objective, the present application provides a separator, a secondary battery, a battery module, a battery pack and an electrical apparatus.

A first aspect of the present application provides a separator. The separator sequentially includes a first region, a main region and a second region in a first direction, where at least one surface of the first region and/or at least one surface of the second region is provided with a fluorescent coating, and the fluorescent coating is used to identify whether the separator is folded or not.

In this way, when the separator is folded, a fluorescent color of the fluorescent coating at a folded portion is absent, indicating that this portion is folded. Therefore, the separator of the present application is allowed to be identified in time after being folded, and the folded separator is prevented from being made into a lithium-ion battery, which is conductive to increasing yield of the lithium-ion battery.

In any embodiment, in the first direction, a width w₁ of the first region is 0.5 mm to 15 mm, and a width w₂ of the second region is 0.5 mm to 15 mm. On the one hand, this makes the absence of the fluorescent color at the folded portion when the separator is folded identified effectively, and on the other hand, reduces occupation of a width of the main region of the separator by the first region and/or the second region, thereby improving isolation performance of the separator.

In any embodiments, the fluorescent coating includes a fluorescent material, the fluorescent material including at least one of fluorescent metal oxides, fluorescent sulfides and fluorescent lanthanide chelates. This allows the fluorescent coating including the fluorescent material to have a good fluorescence effect.

In any embodiment, the fluorescent coating further includes a binder, the binder including at least one of polyvinylidene fluoride, polyvinyl alcohol and polyacrylonitrile, allowing an interface bonding effect of the fluorescent coating to be improved, functioning to secure the fluorescent coating and the separator, and reducing a risk that the fluorescent coating and a separator substrate are separated from each other to affect the folded separator detection effect.

In any embodiments, the fluorescent coating further includes acrylic resin, and based on the total mass of the fluorescent coating, the fluorescent material has a percentage mass content of 40% to 80%, the binder has a percentage mass content of 1% to 10%, and the acrylic resin has a percentage mass content of 10% to 50%. This allows for an improvement of film-forming property of the fluorescent coating, and helps to obtain a fluorescent coating with uniform thickness and good adhesion.

In any embodiments, an inorganic coating is disposed between the fluorescent coating and the first region, and/or an inorganic coating is disposed between the fluorescent coating and the second region. The inorganic coating is capable of supporting the separator and the fluorescent coating to improve hardness of an edge (i.e., the first region and/or the second region) of the separator, making the edge of the separator less prone to being folded and improving performance of the separator.

In any embodiment, the inorganic coating includes inorganic particles, the inorganic particles including at least one of aluminum oxide and boehmite. This allows for an effective improvement of the support to the separator and the fluorescent coating, making the edge of the separator less prone to being folded.

A second aspect of the present application provides a method for identifying a folded separator, which is applied to the separator as described in any of the foregoing embodiments and includes monitoring, by a color sensor, whether a fluorescent region of the separator has a fluorescent color in the process of the separator moving in a second direction; and determining that the separator is folded when the color sensor monitors the absence of the fluorescent color in the fluorescent region.

In this way, by monitoring whether a fluorescent region of the separator has a fluorescent color through the color sensor in the process of the separator moving in the second direction, a folded separator is identified, and the folded separator is prevented from being made into a lithium-ion battery, which is conductive to increasing yield of the lithium-ion battery.

A third aspect of the present application provides an electrode assembly, including a positive electrode plate, a negative electrode plate, and the separator as described in any one of the foregoing embodiments.

In this way, the folded separator is identified, and the folded separator may be discarded, so the lithium-ion battery including the electrode assembly of the present application has a higher yield.

In any embodiment, in the first direction, the width w₁ of the first region is not less than a first width W₃, and the first width W₃ is a distance between an upper edge of the negative electrode plate and an upper edge of the positive electrode plate. This allows the fluorescent coating in the first region to have a better identification effect without causing the first region to occupy too much of a width of the main region of the separator, thereby improving isolation performance of the separator.

In any embodiments, in the first direction, the width w₂ of the second region is not less than a second width W₄, and the second width W₄ is a distance between a lower edge of the negative electrode plate and a lower edge of the positive electrode plate. This allows the fluorescent coating in the second region to have a better identification effect without causing the second region to occupy too much of a width of the main region of the separator, thereby improving isolation performance of the separator.

A fourth aspect of the present application provides a secondary battery including the electrode assembly of the third aspect of the present application.

A fifth aspect of the present application provides a battery module including the secondary battery of the fourth aspect of the present application.

A sixth aspect of the present application provides a battery pack, including the battery module of the fifth aspect of the present application.

A seventh aspect of the present application provides an electrical apparatus including at least one selected from the secondary battery of the fourth aspect of the present application, the battery module of the fifth aspect of the present application, or the battery pack of the sixth aspect of the present application.

The present application has the beneficial effects below.

The present application provides a separator, a secondary battery, a battery module, a battery pack and an electrical apparatus. In a first direction, the separator sequentially includes a first region, a main region and a second region in a first direction, where at least one surface of the first region and/or at least one surface of the second region is provided with a fluorescent coating, and the fluorescent coating is capable of identifying whether the separator is folded or not. When the separator is folded, a fluorescent color of the fluorescent coating at the folded portion is absent, indicating that this portion is folded. Therefore, the separator of the present application is allowed to be identified in time after being folded, and the folded separator is prevented from being made into a lithium-ion battery, which is conductive to increasing yield of the lithium-ion battery.

### Description of Drawings

Fig. 1 is a schematic structural diagram of a separator according to an embodiment of the present application.
Fig. 2 is a cross-sectional view of FIG. 1 along section AA.
Fig. 3 is a schematic structural diagram of a separator according to another embodiment of the present application.
Fig. 4 is a schematic structural diagram of a separator according to a third embodiment of the present application.
Fig. 5 is a schematic structural diagram of a separator according to a fourth embodiment of the present application.
Fig. 6 is a schematic flowchart of a method for identifying a folded separator according to an embodiment of the present application.
Fig. 7 is a schematic structural diagram of a three-layer structural strip according to an embodiment of the present application.
Fig. 8 is a schematic diagram of a secondary battery according to an embodiment of the present application.
Fig. 9 is an exploded view of the secondary battery according to an embodiment of the present application as shown in Fig. 8.
Fig. 10 is a schematic diagram of a battery module according to an embodiment of the present application.
Fig. 11 is a schematic diagram of a battery pack according to an embodiment of the present application.
Fig. 12 is an exploded view of the battery pack according to an embodiment of the present application shown in Fig. 11.
Fig. 13 is a schematic diagram of an electrical apparatus in which a secondary battery is used as a power source according to an embodiment of the present application.

Description of reference numerals:
1 battery pack; 2 upper box; 3 lower box; 4 battery module; 5 secondary battery; 51 case; 52 electrode assembly; 53 top cover assembly; 6 fluorescent coating; 7 binder; 8 inorganic coating; 10 separator; 11 first region; 12 main region; and 13 second region.

### Detailed Description

Hereinafter, the embodiments of the separator, secondary battery, battery module, battery pack and electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

The applicants found in the research that during preparation of a lithium-ion battery, for example, for a battery in winding structure, a separator may be folded in a winding process. As the separator plays a role in isolating a positive electrode plate from a negative electrode plate, when the separator is folded, the positive electrode plate and negative electrode plate may come into contact with each other at the folded position, resulting in a short circuit inside the lithium-ion battery to affect safety of the lithium-ion battery.

Based on this, the applicants, after in-depth research, found that by using a fluorescent material in the separator, a portion of the separator where the fold occurs is allowed to be identified based on the fluorescent material on a surface of the separator during preparation of the lithium-ion battery.

In this way, the folded separator may be identified in time, avoiding a battery safety accident caused by the folded separator being made into a battery.

In order to effectively identify a folded separator and prevent the folded separator being made into a lithium-ion battery, the present application provides a separator, a secondary battery, a battery module, a battery pack and an electrical apparatus.

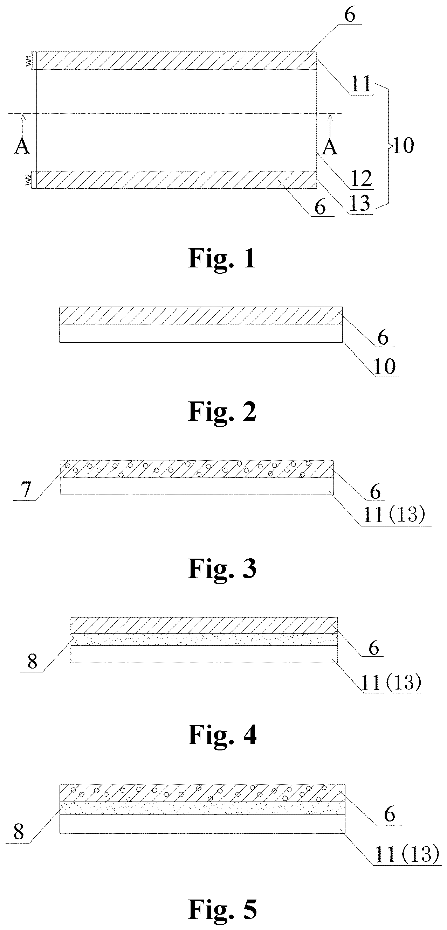

In one embodiment of the present application, the present application proposes a separator. Referring to Figs. 1 and 2, Fig. 1 is a schematic structural diagram of a separator of the present application, and Fig. 2 is a cross-sectional view of Fig. 1 along section AA. A separator 10 sequentially includes a first region 11, a main region 12 and a second region 13. At least one surface of the first region 11 and/or at least one surface of the second region 13 is provided with a fluorescent coating 6. The fluorescent coating 6 is used to identify whether the separator 10 is folded or not.

In the embodiment of the present application, a first direction is a width direction of the separator 10. The main region 12 refers to the main part of the separator 10, and the main region 12 plays a role in isolating the positive electrode plate from the negative electrode plate in the lithium-ion battery. The first region 11 and the second region 13 refer to the parts, on two sides of the main region 12 respectively, of the separator 10 in the first direction. The first region 11 and the second region 13 are generally located at edges of the separator 10.

At least one surface of the first region 11 and/or at least one surface of the second region 13 is provided with a fluorescent coating 6. In some embodiments, at least one surface of the first region 11 is provided with a fluorescent coating 6. In some embodiments, at least one surface of the second region 13 is provided with a fluorescent coating 6. In some embodiments, at least one surface of the first region 11 and at least one surface of the second region 13 each are provided with a fluorescent coating 6. It may be understood that since the separator 10 has two sides, the fluorescent coating 6 may be disposed on one surface of the first region 11, or both surfaces of the first region 11 are provided with the fluorescent coating 6, as long as a fluorescence effect is achieved. The same is true for the fluorescent coating 6 in the second region 13.

In the embodiment of the present application, at least one surface of the first region 11 and/or at least one surface of the second region 13 is provided with the fluorescent coating 6, and the fluorescent coating 6 is capable of identifying whether the separator 10 is folded or not. Based on this, when the separator 10 is folded, a fluorescent color of the fluorescent coating 6 at a folded portion is absent, indicating that this portion is folded. This allows the folded separator 10 to be identified in time, and the folded separator 10 is prevented from being made into a battery, which is conductive to increasing yield of the lithium-ion battery.

In some embodiments, referring to Fig. 1, in the first direction, a width w₁ of the first region 11 is 0.5 mm to 15 mm and a width w₂ of the second region 13 is 0.5 mm to 15 mm. The applicants found that the width w₁ of the first region 11 and/or the w₂ of the second region 13 is controlled within the above-mentioned range, making the absence of the fluorescent color at the folded portion when the separator is folded identified effectively on the one hand, and reducing occupation of a width of the main region of the separator by the first region and/or the second region, thereby avoiding a significant reduction in isolation performance of the separator, w₁ and w₂ may be adjusted according to the overall width of the separator. For example, when the overall width of the separator is larger, w₁ and w₂ may be set larger; when the overall width of the separator is smaller, w₁ and w₂ may be set smaller, as long as it is ensured that w₁ and w₂ are within the range of the present application.

In some embodiments, the fluorescent coating 6 includes a fluorescent material. The present application has no particular limitation on the fluorescent material of the fluorescent coating 6, as long as the fluorescent material is capable of producing fluorescence to achieve the purpose of the present application. In some embodiments, the fluorescent material includes at least one of fluorescent metal oxides, fluorescent sulfides and fluorescent lanthanide chelates. Exemplarily, the fluorescent material may be specifically selected from at least one of Y₂O₃S, BaMgAl₁₀O₁₇:Eu (europium-activated barium magnesium aluminate), Y₂O₃:Eu (europium-activated yttrium trioxide), LaPO₄:Ce,Tb (cerium and terbium activated lanthanum phosphate), and MN₂S₂:Eu (M is selected from Ba, Sr or Ca; N is selected from Al, Ca or In), for example, MN₂S₂:Eu may be BaAl₂S₂:Eu (europium-activated barium sulphoaluminate). The fluorescent coating of the present application includes the fluorescent material described above, which makes the first region and/or the second region fluorescent, facilitating the identification of the folded separator.

In some embodiments, as shown in Fig. 3, the fluorescent coating 6 further includes a binder 7. The present application has no particular limitation on the binder, as long as the binder is adhesive after being heated to achieve the purpose of the present application. In some embodiments, the binder includes at least one of polyvinylidene fluoride, polyvinyl alcohol and polyacrylonitrile.

The fluorescent coating 6 of the present application includes the binder 7, when an electrode assembly is heated, regions of the fluorescent coating 6 at the edges of the separator 10 are bonded to each other, allowing an interface bonding effect of the fluorescent coating 6 to be improved, functioning to secure the fluorescent coating 6 and the separator 10, and reducing a risk that the fluorescent coating 6 and a separator substrate are separated from each other to affect the folded separator detection effect. It should be noted that the binder 7 in Fig. 3 is only an example, the binder in the fluorescent coating 6 practically may be uniformly distributed in the fluorescent coating 6.

In some embodiments, the fluorescent coating 6 further includes acrylic resin, and based on the total mass of the fluorescent coating 6, the fluorescent material has a percentage mass content of 40% to 80%, the binder has a percentage mass content of 1% to 10%, and the acrylic resin has a percentage mass content of 10% to 50%. In the present application, the fluorescent coating 6 includes acrylic resin, which allows for an improvement of film-forming property of the fluorescent coating, and helps to obtain a fluorescent coating with uniform thickness and good adhesion.

According to the present application, the content of fluorescent material, binder, and acrylic resin is synergistically controlled within the above-mentioned range, so a fluorescent coating with excellent fluorescence, excellent interface bonding performance, and excellent film-forming property is enabled. This improves bonding performance between the fluorescent coating and the separator substrate, and reduces a risk that the fluorescent coating and a separator substrate are separated from each other to affect the folded separator detection effect.

In some embodiments, as shown in Fig. 4, in a thickness direction of the separator, an inorganic coating 8 is disposed between the fluorescent coating 6 and the first region 11, and/or, in a thickness direction of the separator, an inorganic coating 8 is disposed between the fluorescent coating 6 and the second region 13. Specifically, in some embodiments, an inorganic coating 8 is disposed between the fluorescent coating 6 and the first region 11 in a thickness direction of the separator.

In some embodiments, an inorganic coating 8 is disposed between the fluorescent coating 6 and the second region 13 in a thickness direction of the separator. In some embodiments, an inorganic coating 8 is disposed between the fluorescent coating 6 and the second region 13, as well as between the fluorescent coating 6 and the second region, in a thickness direction of the separator.

The inorganic coating is capable of supporting the separator and the fluorescent coating to improve hardness of an edge of the separator, i.e., the first region 11 and/or the second region 13, making the edge of the separator less prone to being folded and improving performance of the separator.

In some embodiments, the inorganic coating 8 includes inorganic particles. The present application has no particular limitation on the inorganic particles in the fluorescent coating 6, as long as the purpose of the present application can be achieved. In some embodiments, the inorganic particles include at least one of aluminum oxide and boehmite. This allows for an effective improvement of the support to the separator and the fluorescent coating, making the edge of the separator less prone to being folded. The present application has no particular limitation on the particle size of the inorganic particles, as long as the purpose of the present application can be achieved.

in some embodiments as shown in Fig. 5, an inorganic coating 8 is disposed between the fluorescent coating 6 and the first region 11 and/or the second region 13, and the fluorescent coating 6 further includes a binder 7. The cooperation of the binder 7 and the inorganic coating 8 not only allows for an improvement of interface bonding effect of the fluorescent coating and reduces a risk that the fluorescent coating and a separator substrate are separated from each other to affect the folded separator detection effect, but also improves hardness of the first region and/or the second region to make the edge of the separator less prone to being folded, thereby improving performance of the separator.

The present application has no particular limitation on a method for preparing the fluorescent coating, as long as the purpose of the present application can be achieved. For example, a fluorescent slurry containing a fluorescent material may be coated at the edge of a surface of the separator substrate to form the fluorescent coating. The present application has no particular limitation on the fluorescent slurry, as long as the purpose of the present application can be achieved. For example, the fluorescent slurry may contain a fluorescent material, a dispersant, acrylic resin, an organic solvent and other substances. In addition, a binder may be added to the fluorescent slurry to improve the interface bonding effect of the fluorescent coating. The present application has no particular limitation on the dispersant, as long as the purpose of the present application can be achieved. For example, the dispersant may be selected from silicates (e.g. sodium silicate), alkali metal phosphates (e.g., sodium tripolyphosphate, sodium hexametaphosphate or sodium pyrophosphate), or the like.

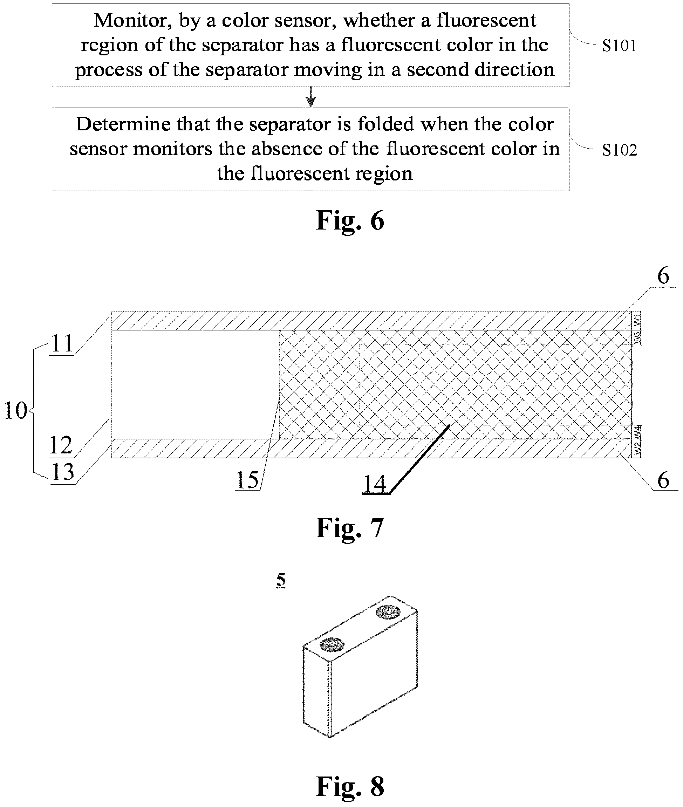

In one embodiment of the present application, the present application proposes a method for identifying a folded separator, applied to the separator described in any of the foregoing embodiments. As shown in Fig. 6, the method includes:
S101: Monitor, by a color sensor, whether a fluorescent region of the separator has a fluorescent color in the process of the separator moving in a second direction.

In the embodiment of the present application, the second direction refers to a length direction of the separator. It may be understood that before winding of an electrode assembly, the positive electrode plate and the negative electrode plate are respectively disposed on two sides of the separator to form a three-layer structural strip as shown in Fig. 7, and then the strip is wound to form an electrode assembly by a winding device. As shown in Fig. 7, a positive electrode plate 14 and a negative electrode plate 15 are respectively located on two sides of a separator 10, where a width of the negative electrode plate 15 is usually less than a width of the separator 10 but greater than a width of the positive electrode plate 14, and a region (i.e., the first region 11 and/or the second region 13) with a fluorescent coating 6 is between the edge of the negative electrode plate 15 and the edge of the separator 10. Based on this, a color sensor may be fixed on the winding device, and monitors the region, i.e., the region with the fluorescent coating, between the edge of the negative electrode plate and the edge of the separator of the strip, so as to identify whether the fluorescent color is absent in this region.

S102: Determine that the separator is folded when the color sensor monitors the absence of the fluorescent color in the fluorescent region. In the embodiment of the present application, there is no special limitation on the color sensor, as long as it can identify the fluorescent color. The color sensor may be a commercially available color sensor.

In the process of the separator 10 moving in the second direction, when the separator 10 is folded, the fluorescent color in the corresponding electrode region is absent, which will be monitored by the color sensor. The color sensor may send a monitored result to a management unit, so the management unit may determine that the separator is folded. In the embodiment of the present application, there is no special limitation on the management unit, for example, it may be a programmable controller in the winding device.

In the embodiment of the present application, by monitoring whether a fluorescent region of the separator has a fluorescent color through the color sensor in the process of the separator moving in the second direction, a folded separator is identified, and the folded separator is prevented from being made into a lithium-ion battery, which is conductive to increasing yield of the lithium-ion battery.

In one embodiment of the present application, the present application proposes an electrode assembly, referring to Fig. 7, including the positive electrode plate 14, the negative electrode plate 15, and the separator 10 described in any of the foregoing embodiments. After the electrode assembly of the present application is made into a lithium-ion battery, since the folded separator is identified, the lithium-ion battery has a higher yield.

In some embodiments, referring to Fig. 7, in the first direction, the width w₁ of the first region 11 is not less than a first width W₃, and the first width W₃ is a distance between an upper edge of the negative electrode plate 15 and an upper edge of the positive electrode plate 14.

In the embodiment of the present application, the first direction refers to a width direction of the separator. The distance between the upper edge of the negative electrode plate 15 and the upper edge of the positive electrode plate 14 refers to a width of a region where the negative electrode plate 15 exceeds the positive electrode plate 14, that is, a width of an Overhang region. As the width w₁ of the first region 11 is not less than the first width W₃, the width of the first region 11 is increased. This allows the fluorescent coating in the first region 11 to have a better identification effect without causing the first region 11 to occupy too much of the width of the main region 12 of the separator, thereby improving isolation performance of the separator.

In some embodiments, referring to Fig. 7, in the first direction, the width w₂ of the second region 13 is not less than a second width W₄, and the second width W₄ is a distance between a lower edge of the negative electrode plate and a lower edge of the positive electrode plate.

In the embodiment of the present application, the distance between the upper edge of the negative electrode plate 15 and the upper edge of the positive electrode plate 14 refers to a width of a region where the negative electrode plate 15 exceeds the positive electrode plate 14, that is, a width of an Overhang region. As the width w₂ of the second region 13 is not less than a second width W₄, the width of the second region 13 is increased. This allows the fluorescent coating in the second region 13 to have a better identification effect without causing the second region 13 to occupy too much of the width of the main region 12 of the separator, thereby improving isolation performance of the separator.

The separator of the present application may be applied to an electrode assembly of a winding structure or an electrode assembly of a stacking structure. The present application is not particularly limited thereto, and only cutting according to the size of the winding structure or the stacking structure is required to perform as needed.

Moreover, the secondary battery, battery module, battery pack and electrical apparatus of the present application will be described hereafter with appropriate reference to the drawings.

In an embodiment of the present application, a secondary battery is provided.

Generally, the secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through.

### [Positive electrode plate]

The positive electrode plate includes a positive electrode current collector and a positive electrode film layer provided on at least one surface of the positive electrode current collector.

As an example, the positive-electrode current collector has two opposite surfaces in its own thickness direction, and the positive electrode film layer is disposed on either or both of the two opposite surfaces of the positive-electrode current collector.

In some embodiments, the positive electrode current collector may be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium-nickel-cobalt-aluminum oxide (such as LiNi_{0.85}Co_{0.15}Al_{0.05}O₂) and their respective modified compounds.

Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally includes a positive electrode film layer binder. As an example, the positive electrode film layer binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by dispersing the components for preparing the positive electrode plate, for example, the positive electrode active material, the conductive agent, the positive electrode film layer binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

### [Negative electrode plate]

The negative electrode plate includes a negative-electrode current collector and a negative electrode film layer provided on at least one surface of the negative electrode current collector. The negative electrode film layer includes a negative-electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative electrode active material may include at least one of artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy.

However, the present application is not limited to these materials, and other conventional materials useful as negative electrode active materials for batteries can also be used. It is possible to use only one of these negative electrode active materials alone, or to use more than two in combination.

In some embodiments, the negative electrode film layer further optionally includes a negative electrode film layer binder. The negative electrode film layer binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other auxiliaries, for example, a thickener (such as sodium carboxymethyl cellulose (CMC-Na)) and the like.

In some embodiments, the negative electrode plate can be prepared in the following manner: dispersing the above components for preparing the negative electrode plate, such as the negative active material, the conductive agent, the negative electrode film layer binder, and any other components, in a solvent (e.g., deionized water) to form a negative electrode slurry; and coating the negative electrode slurry on the negative current collector, and after processes such as oven drying and cold pressing, the negative electrode plate can be obtained.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally includes an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### [Separator]

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may include an outer package. The outer package may be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a pouch. The pouch may be made of a plastic, and examples of the plastic include polypropylene, polybutylene terephthalate and polybutylene succinate.

The present application has no particular limitation on the shape of the secondary battery, which may be cylindrical, square or any other shape. For example, Fig. 8 shows a secondary battery 5 with a square structure as an example.

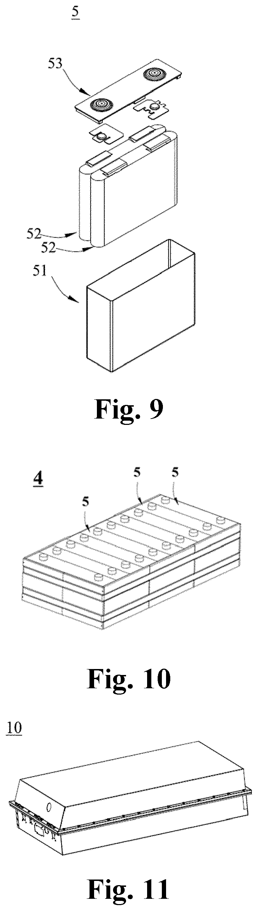

In some embodiments, referring to Fig. 9, the outer package may include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 is capable of covering the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the secondary battery 5 may be one or more, which may be selected by those skilled in the art according to specific actual requirements.

In some embodiments, the secondary batteries may be assembled into a battery module, the number of the secondary batteries included in the battery module may be one or more, and the specific number may be selected by those skilled in the art according to the application and capacity of the battery module.

Fig. 10 shows a battery module 4 as an example. Referring to Fig. 10, in the battery module 4, a plurality of secondary batteries 5 may be arranged in sequence along a length direction of the battery module 4. Of course, any other arrangement is also possible. The plurality of secondary batteries 5 may further be fixed by fasteners.

Optionally, the battery module 4 may further include a shell having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

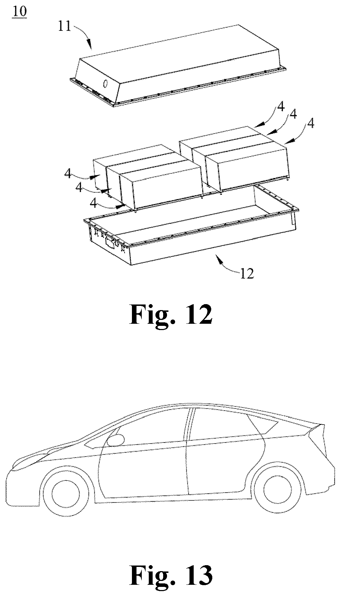

Fig. 11 and Fig. 12 are an example of battery pack 1. Referring to Figs. 11 and 12, the battery pack 1 may include a battery box and a plurality of battery modules 4 disposed in the battery box. The battery box includes an upper box body 2 and a lower box body 3, the upper box body 2 may cover the lower box body 3 to form a closed space for accommodating the battery modules 4. The plurality of battery modules 4 may be arranged in the battery box in any manner.

Additionally, the present application further provides an electrical apparatus including at least one of the secondary battery, battery module or battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 13 is an example of electrical apparatus. The electrical apparatus is an all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

### Example 1

### <Preparation of separator>

### <Preparation of fluorescent slurry>

The fluorescent material Y₂O₃S, dispersant sodium tripolyphosphate, acrylic resin and organic solvent N-methyl pyrrolidone (NMP) were mixed at a mass ratio of 35:2:30:33 and stirred under the action of a vacuum mixer until the system was homogeneous, so as to obtain a fluorescent slurry.

### <Preparation of separator with fluorescent coating>

A commercially available porous polyethylene film with a thickness of 7 µm was selected as a separator substrate, two edges of the separator substrate were coated with the fluorescent slurry to form the first region and the second region as shown in Fig. 1, where a thickness of the fluorescent coating in both the first region and the second region is 5 µm, the width w₁ of the first region is 1.0 mm, and the width w₂ of the second region is 1.0 mm. Then a fluorescent coating was prepared on the other side of the separator in the same steps to obtain a separator with fluorescent coatings on both sides.

### <Preparation of positive electrode plate>

The positive electrode active material LiNi_{0.8}Co_{0.1}Mn_{0.1}O₂, conductive agent conductive carbon black, and binder polyvinylidene fluoride (PVDF) were mixed at a mass ratio of 96:2:2, and then N-methyl pyrrolidone (NMP) was added as a solvent, and stirring was performed under the action of a vacuum mixer until the system was homogeneous, so as to obtain a positive electrode slurry with a solid content of 60wt%. The positive electrode slurry was evenly coated on one surface of aluminum foil with a thickness of 12 µm, dried at 120°C, and cold pressed to obtain a positive electrode plate having a positive active material layer with a thickness of 60 µm. The above steps were then repeated on the other surface of this positive electrode plate to obtain a positive electrode plate with the positive active material layer coated on both sides. A tab forming process, a slitting process, and the like were performed to obtain a positive electrode plate.

### <Preparation of negative electrode plate>

The negative electrode active material artificial graphite, conductive carbon black and sodium polyacrylate were mixed at the mass ratio of 95:2:3, deionized water was then added as a solvent, and stirring was performed under the action of a vacuum mixer until the system was homogeneous, so as to obtain a negative electrode slurry with a solid content of 50wt%. The negative electrode slurry was evenly coated on a surface of copper foil with a thickness of 8 µm, dried at 110°C, and cold pressed to obtain a negative electrode plate having a negative electrode active material layer with a thickness of 70 µm. Then the above steps were repeated on the other surface of the negative electrode plate to obtain a negative electrode plate with the negative active material layer coated on both sides, and a tab forming process, a slitting process and the like were performed to obtain a negative electrode plate.

### <Preparation of electrode assembly>

The positive electrode plate, separator and negative electrode plate described above were stacked in sequence, and the separator was placed between the positive electrode plate and the negative electrode plate to play a role of isolation, where the first width w₃ = 0.5 mm and the second width w₄ = 0.5 mm, and then they were wound to obtain an electrode assembly.

### Example 2

Except that the fluorescent slurry was coated on one side of the separator to obtain a separator with a fluorescent coating on one side, the others are the same as Example 1.

### Example 3

Except that the fluorescent slurry is coated on one edge of the separator to obtain a separator having the first region or the second region, the others are the same as Example 1

### Example 4

Except that the fluorescent slurry is coated on one edge of the separator to obtain a separator having the first region or the second region, and one side of the separator is coated with the fluorescent slurry, the others are the same as Example 1.

### Example 5

Except that <Preparation of fluorescent slurry> is different from Example 1, the others are the same as Example 1.

### <Preparation of fluorescent slurry>

The fluorescent material Y₂O₃S, binder polyvinylidene fluoride (PVDF), dispersant sodium tripolyphosphate, acrylic resin and organic solvent N-methyl pyrrolidone (NMP) were mixed at a mass ratio of 22:3:2:26:47 and stirred under the action of a vacuum mixer until the system was homogeneous, so as to obtain a fluorescent slurry.

### Example 6

Except that <Preparation of separator> is different from Example 1, the others are the same as Example 1.

### <Preparation of separator>

### <Preparation of fluorescent slurry>

The same as Example 1.

### <Preparation of inorganic slurry>

Aluminum oxide (Al₂O₃, average particle size of 3 µm) was dispersed into N-methyl pyrrolidone (NMP) to form an inorganic slurry with a solid content of 50wt%.

### <Preparation of separator with fluorescent coating>

A commercially available porous polyethylene film with a thickness of 7 µm was selected as a separator substrate, two edges of the separator substrate were coated with the inorganic slurry, and dried to obtain an inorganic coating with a thickness of 1 µm, and then the inorganic coating was coated with the fluorescent slurry to form the structure shown in Fig. 4, where a thickness of the fluorescent coating in both the first and second regions was 5 µm, the width of the first region was 3 mm, and the width of the second region was 3 mm. The fluorescent coating was then prepared on the other side of the separator in the same steps to obtain a separator with both inorganic coating and fluorescent coating on both sides.

### Example 7

Except that <Preparation of separator> is different from Example 5. The others are the same as Example 5.

### <Preparation of separator>

### <Preparation of fluorescent slurry>

The same as Example 5.

### <Preparation of inorganic slurry>

Boehmite (average particle size of 2 µm) was dispersed into N-methyl pyrrolidone (NMP) to form an inorganic slurry with a solid content of 50wt%.

### <Preparation of separator with fluorescent coating>

A commercially available porous polyethylene film with a thickness of 9 µm was selected as a separator substrate, and two edges of the separator substrate were coated with the inorganic slurry, and dried to obtain an inorganic coating with a thickness of 1 µm, and then the fluorescent slurry was coated on the inorganic coating to form the structure shown in Fig. 5, where a thickness of the fluorescent coating in both the first and second region was 5 µm, the width of the first region was 3 mm, and the width of the second region was 3 mm. A fluorescent coating was then prepared on the other side of the separator in the same steps to obtain a separator with both inorganic coating and fluorescent coating on both sides.

### Example 8

Except that <Preparation of fluorescent slurry> is different from Example 1, the others are the same as Example 1.

### <Preparation of fluorescent slurry>

The fluorescent material Y₂O₃:Eu, acrylic resin, dispersant sodium tripolyphosphate, and organic solvent N-methyl pyrrolidone (NMP) were mixed at a mass ratio of 40:1:10:49 and stirred under the action of a vacuum mixer until the system was homogeneous, so as to obtain a fluorescent slurry.

### Example 9

Except that in <Preparation of separator>, the first region has the width wi=0.5 mm, the second region has the width w₂=0.5 mm, the first width w₃=0.3 mm, and the second width w₄=0.3 mm, the others are the same as Example 1.

### Example 10

Except that in <Preparation of separator>, the first region has the width wi=15 mm, the second region has the width w₂=15mm, the first width w₃=2mm, and the second width w₄=2mm, the others are the same as Example 1.

### Example 11

Except that in <Preparation of separator>, the first region has the width wi=1.0 mm, the second region has the width w₂=1.0 mm, the first width w₃=1.0mm, and the second width w₄=1.0mm, the others are the same as Example 1.

### Example 12

Except that in <Preparation of separator>, the first region has the width wi=1.0 mm, the second region has the width w₂=1.0 mm, the first width w₃=2.0mm, and the second width w₄=2.0mm, the others are the same as Example 1.

### Comparative Example 1

Except that in <Preparation of separator>, the commercially available porous polyethylene film with a thickness of 7 µm was selected as the separator, that is, the separator does not have a fluorescent coating, the others are the same as Example 1.

The parameters related to the above Examples 1 to 12, and Comparative Example 1 are shown in Table 1 below.

**Table 1: Parameter results of Examples 1-12 and Comparative Example 1**

| | w₁ | First widthw₃ | w₂ | Second widthw₄ |
|---|---|---|---|---|
| Example 1 | 1.0 | 0.5 | 1.0 | 0.5 |
| Example 2 | 1.0 | 0.5 | 1.0 | 0.5 |
| Example 3 | 1.0 | 0.5 | - | - |
| Example 4 | - | - | 1.0 | 0.5 |
| Example 5 | 1.0 | 0.5 | 1.0 | 0.5 |
| Example 6 | 1.0 | 0.5 | 1.0 | 0.5 |
| Example 7 | 1.0 | 0.5 | 1.0 | 0.5 |
| Example 8 | 1.0 | 0.5 | 1.0 | 0.5 |
| Example 10 | 15 | 2 | 15 | 2 |
| Example 11 | 1.0 | 1.0 | 1.0 | 1.0 |
| Example 12 | 1.0 | 2.0 | 1.0 | 2.0 |
| Comparative Example 1 | - | 0.5 | - | 0.5 |

In the table, "-" indicates that there is no relevant parameter.

The electrode assemblies were prepared according to the methods of Examples 1-12 and Comparative Example 1, and 100 electrode assemblies were prepared for each Example and Comparative Example. During the preparation of the electrode assemblies, folded separators were identified based on the method for identifying a folded separator provided in the present application, and then the electrode assemblies were disassembled for the user to observe the actual folded separators. The results are shown in Table 2.

**Table 2: Parameter results of Examples 1-12 and Comparative Example 1**

| | The number/total number of folds identified | Actual number/total number of folds after disassembly |
|---|---|---|
| Example 1 | 7/100 | 8/100 |
| Example 2 | 6/100 | 7/100 |
| Example 3 | 6/100 | 7/100 |
| Example 4 | 7/100 | 7/100 |
| Example 5 | 4/100 | 4/100 |
| Example 6 | 4/100 | 4/100 |
| Example 7 | 3/100 | 3/100 |
| Example 8 | 6/100 | 7/100 |
| Example 10 | 7/100 | 8/100 |
| Example 11 | 7/100 | 7/100 |
| Example 12 | 4/100 | 6/100 |
| Comparative Example 1 | 0/100 | 6/100 |

Based on the above results, it can be seen that in Examples 1-12, the number of folded separators identified and the actual number of folded separators observed after disassembly are basically the same, indicating that the separator of the present application is allowed to be effectively identified when being folded.

It can be seen from Example 5 that since fluorescent coating includes the binder, the number of folded separators is further reduced, thereby increasing yield of the lithium-ion battery. It can be seen from Example 6 that the separator includes the inorganic coating, making the separator less prone to being folded, thereby increasing yield of the lithium-ion battery. It can be seen from Example 7 that when the fluorescent coating includes a binder and the separator includes an inorganic coating, the number of folded separators is further reduced through the synergistic effect of the binder and the inorganic coating, thereby further increasing yield of the lithium-ion battery.

In contrast, the separator of Comparative Example 1 does not have the fluorescent coating of the present application, so it is difficult to effectively identify the folded separator, and yield of the lithium-ion battery is not effectively improved.

It should be noted that the present application is not limited to the embodiments above. The above embodiments are merely exemplary, and embodiments having substantially the same technical idea and the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A separator, the separator sequentially comprising a first region, a main region and a second region in a first direction, wherein at least one surface of the first region and/or at least one surface of the second region is provided with a fluorescent coating, and the fluorescent coating is used to identify whether the separator is folded or not.

2. The separator according to claim 1, wherein in the first direction, a width w₁ of the first region is 0.5 mm to 15 mm, and a width w₂ of the second region is 0.5 mm to 15 mm.

3. The separator according to claim 1 or 2, wherein the fluorescent coating comprises a fluorescent material, the fluorescent material comprising at least one of fluorescent metal oxides, fluorescent sulfides and fluorescent lanthanide chelates.

4. The separator according to claim 3, wherein the fluorescent coating further comprises a binder, the binder comprising at least one of polyvinylidene fluoride, polyvinyl alcohol and polyacrylonitrile.

5. The separator according to claim 4, wherein the fluorescent coating further comprises acrylic resin, and based on the total mass of the fluorescent coating, the fluorescent material has a percentage mass content of 40% to 80%, the binder has a percentage mass content of 1% to 10%, and the acrylic resin has a percentage mass content of 10% to 50%.

6. The separator according to any one of claims 1 to 5, wherein an inorganic coating is disposed between the fluorescent coating and the first region, and/or an inorganic coating is disposed between the fluorescent coating and the second region.

7. The separator according to claim 6, wherein the inorganic coating comprises inorganic particles, the inorganic particles comprising at least one of aluminum oxide and boehmite.

8. A method for identifying a folded separator, applied to the separator of any one of claims 1 to 7, the method comprising:
monitoring, by a color sensor, whether a fluorescent region of the separator has a fluorescent color in the process of the separator moving in a second direction; and
determining that the separator is folded when the color sensor monitors the absence of the fluorescent color in the fluorescent region.

9. An electrode assembly, comprising a positive electrode plate, a negative electrode plate, and the separator of any one of claims 1 to 7.

10. The electrode assembly according to claim 9, wherein in the first direction, the width w₁ of the first region is not less than a first width W₃, and the first width W₃ is a distance between an upper edge of the negative electrode plate and an upper edge of the positive electrode plate.

11. The electrode assembly according to claim 9 or 10, wherein in the first direction, the width w₂ of the second region is not less than a second width W₄, and the second width W₄ is a distance between a lower edge of the negative electrode plate and a lower edge of the positive electrode plate.

12. A secondary battery, comprising the electrode assembly of claim 11.

13. A battery module, comprising the secondary battery of claim 12.

14. A battery pack, comprising the battery module of claim 13.

15. An electrical apparatus, comprising at least one selected from the secondary battery of claim 12, the battery module of claim 13, or the battery pack of claim 14.
